## Europäisches Patentamt
## European Patent Office
## Office européen des brevets

(19)

(11) Veröffentlichungsnummer: **0 193 033 B1**

(12) **EUROPÄISCHE PATENTSCHRIFT**

(45) Veröffentlichungstag der Patentschrift: **08.05.91**

(51) Int. Cl.5: **B02C 21/00, B02C 23/32**

(21) Anmeldenummer: **86101819.0**

(22) Anmeldetag: **13.02.86**

(54) **Einrichtung zur Zerkleinerung und Mahlung spröden Mahlgutes wie zum Beispiel Zementklinker, Erz, Kohle oder dergleichen.**

(30) Priorität: **23.02.85 DE 3506486**

(43) Veröffentlichungstag der Anmeldung:
**03.09.86 Patentblatt 86/36**

(45) Bekanntmachung des Hinweises auf die Patenterteilung:
**08.05.91 Patentblatt 91/19**

(84) Benannte Vertragsstaaten:
**AT DE FR GB IT**

(56) Entgegenhaltungen:
**EP-A- 0 084 383**     **CH-A- 413 562**
**CH-A- 469 509**     **DE-B- 1 286 387**
**DE-C- 378 026**     **DE-C- 482 630**
**FR-A- 2 061 937**     **FR-A- 2 324 367**
**GB-A- 2 038 202**

(73) Patentinhaber: **Klöckner-Humboldt-Deutz Aktiengesellschaft
Deutz-Mülheimer-Strasse 111 Postfach 80 05 09
W-5000 Köln 80(DE)**

(72) Erfinder: **Strasser, Siegfried
Gerlinghausen 69
W-5203 Much(DE)**

(74) Vertreter: **Beisner, Klaus, Dipl.-Ing. et al
c/o KHD Humboldt Wedag AG Patente und Lizenzen Wiersbergstrasse Postfach 91 04 57
W-5000 Köln 91(DE)**

## Beschreibung

Die Erfindung betrifft eine Einrichtung zur Zerkleinerung und Mahlung spröden Mahlgutes wie zum Beispiel Zementklinker, Erz, Kohle oder dergleichen, mit einer eine Mahlkörper beinhaltenden Rohrmühle und wenigstens einen Sichter umfassenden Umlaufmahlanlage, der eine Hochdruck-Walzenpresse mit Gutbettzerkleinerung des Gutes vorgeschaltet ist.

Man hat in letzter Zeit erhebliche Anstrengungen unternommen, die sehr geringe Energieausnutzung in den Zerkleinerungsmaschinen, insbesondere in den Rohrmühlen zu steigern. So ist eine zweistufige Einrichtung zur Zerkleinerung spröden Mahlgutes wie zum Beispiel nicht vorzerkleinerter Zementklinker bekannt (EP-Patent 0 084 383), bei der das Mahlgut zunächst in einer ersten Stufe im Spalt einer mit hoher Preßkraft betriebenen walzenpresse gepreßt wird, was teils zur Partikelzerstörung, teils zur Erzeugung von Anrissen im Partikelinneren führt und sich sichtbar in der Bildung von Agglomeraten (Schülpen) äußert, deren Mahlbarkeit verglichen mit ungepreßtem Material erheblich verbessert ist. In der Walzenpresse werden die einzelnen Partikel des durch Reibung in den Walzenspalt eingezogenen Mahlgutes in einem Gutbett, d. h. in einer zwischen den beiden Walzenoberflächen zusammengedrückten Materialschüttung bei Anwendung des hohen Druckes gegenseitig zerquetscht, so daß man hierbei von der sogenannten Gutbettzerkleinerung spricht. Die in der Walzenpresse gepreßten Gutmaterialschülpen werden in einer zweiten Stufe in einer Rohrmühle bzw. Kugelmühle mit vergleichsweise geringem Energieaufwand wieder zerstört und auf Fertiggutfeinheit gemahlen. Diese bekannte zweistufige Zerkleinerung führt, im Vergleich zur konventionellen Zerkleinerung ohne Anwendung der Hochdruck-Preßtechnik, insgesamt zu einer deutlichen Verminderung des spezifischen Energiebedarfs, zum Beispiel gemessen in kWh/t.

Die den Preßwalzenspalt der Walzenpresse nach unten verlassenden Gutagglomerate (Schülpen) werden bisher in einer eigenen der Walzenpresse nachgeschalteten Desagglomeriermaschine wie zum Beispiel Prallzerkleinerer, Kugelmühle oder dergleichen Zerkleinerer aufgelöst, bevor das Schülpenmaterial einem Sichter zum Zwecke der Sichtung zugeleitet wird. Nach Fig. 3 der EP-PS 0 084 383 ist auch schon vorgeschlagen worden, die den Walzenspalt der Walzenpresse verlassenden Schülpen unmittelbar einem nachgeschalteten Sichter zuzuleiten und in diesem Sichter die Schülpen zu desagglomerieren und das aufgelöste Schülpenmaterial zu sichten, wozu es aber einer besonderen Ausrüstung des Sichters wie zum Beispiel Einbau eines Prallzerkleinerers bedarf. In jedem Fall ist die Desagglomeration der Walzenpressen-Schülpen bisher immer unter Einsatz eines besonderen maschinellen Aufwandes und folglich zusätzlichen Betriebskostenaufwandes bewerkstelligt worden.

Die im Walzenspalt der Hochdruck-Walzenpresse aus dem körnigen Aufgabegut gepreßten Gutmaterialschülpen können einen bereits hohen Anteil an bis zur gewünschten Endfeinheit (zum Beispiel Zementfeinheit) reduzierten Partikeln (zum Beispiel etwa 30 % kleiner 90 $\mu$m) enthalten, der nicht mehr weiter zerkleiner werden muß. Bei der bekannten zweistufigen Zerkleinerungseinrichtung ist nicht ausgeschlossen, daß dieser Anteil die Mahlung der Gutmaterialschülpen in der Kugelmühle oder sonstigen Zerkleinerungsmaschine belastet, wodurch die mit der Gutbettzerkleinerung im Walzenspalt einer Hochdruck-Walzenpressen verbundene hohe Energieersparnis wieder gemindert werden würde.

Der Erfindung liegt die Aufgabe zugrunde, bei einer zweistufigen Zerkleinerungseinrichtung der eingangs genannten Art dafür zu sorgen, daß die den Preßwalzenspalt der Hochdruck-Walzenpresse verlassenden Gutmaterialschülpen wirkungsvoll desagglomeriert werden, ohne da für zusätzliche Betriebskosten aufwenden zu müssen und dafür zu sorgen, daß die mit Mahlkörpern bestückte Rohrmühle der die zweite Stufe bildenden Umlaufmahlanlage von dem in den Gutmaterialschülpen enthaltenen Fertiggutanteil entlastet ist, so daß insgesamt der spezifische Energiebedarf der zweistufigen Zerkleinerungseinrichtung reduziert ist.

Diese Aufgabe wird gemäß der Erfindung mit den Maßnahmen des Kennzeichnungsteiles des Anspruchs 1 gelöst. Weitere vorteilhafte Ausgestaltungen sind in den Ansprüchen 2 bis 6 angegeben.

Bei der erfindungsgemäßen zweistufigen Zerkleinerung mit Hochdruck-Walzenpresse und Umlaufmahlanlage wird das Walzenpressen-Austragsgut nicht direkt der Rohrmühle zugeführt, sondern im desagglomerierten Zustand zunächst einem Sichter, der aus dem desagglomerierten Gut den vorhandenen Anteil des Gutes heraussichtet, der bereits die gewünschte Fertiggutfeinheit aufweist. Nur das Grobgut (Grieße) des Sichters wird direkt oder gegebenenfalls über einen weiteren Sichter in die mit Mahlkörpern gefüllte Rohrmühle eingeführt, wodurch die Rohrmühle von bereits ausreichend feinem Gut entlastet ist. Zur Desagglomerierung des Walzenpressen-Austragsgutes ist am Gutauslauf der Rohrmühle eine mit dieser mitrotierende Desagglomerier-Trommel angeordnet, deren Guteinlauf mit dem Austrag der Walzenpresse und deren Gutauslauf mit dem Sichter in Verbindung stehen.

Die Desagglomerier-Trommel kann erfindungsgemäß am Austragsende der Rohrmühle einfach angeflanscht oder mit dem Mühlenrohr integriert sein. Dadurch, daß von den beiden Kammern des Drehrohres nur die Rohrmühlenkammer mit Mahlkörpern, üblicherweise Metallkugeln gefüllt ist, nicht jedoch die Desagglomerier-Trommel, in der die von der Hochdruck-Walzenpresse gebildeten Agglomerate autogen aufgelöst werden, verringert sich die Mahlkörpermasse und schon deswegen wird eine spürbare Reduzierung der Leistungsaufnahme des Drehrohres und damit Reduzierung des spezifischen Energiebedarfs erreicht. Hinzu kommt, daß die Rohrmühle wirklich nur Mahlgut mahlt, dessen Korngröße größer ist als die gewünschte Feinheit des Fertiggutes. Vor allem wird die Desagglomerier-Trommel von der von Feingut entlasteten Rohrmühle quasi gratis ohne Verursachung weiterer Betriebskosten angetrieben, d. h. die Desagglomerierung der Gutmaterialschülpen wird ohne zusätzliche Betriebskosten von der Rohrmühle miterledigt.

Zwar ist es zum Beispiel aus der DE-B-12 86 387 bekannt, aus dem zu trocknenden Aufgabegut einer Mahlkörper beinhaltenden Rohrmühle Feinstgut wie Staub herauszusichten, wodurch die Rohrmühle von diesem Staub entlastet werden kann, und Trockentrommel und Rohrmühle zusammenzukoppeln. Jedoch ist der bekannten Drehrohrkonstruktion nicht eine Hochdruck-Walzenpresse vorgeschaltet, und in der Trockentrommel wird das Aufgabegut nicht desagglomeriert, denn mangels Druckbeanspruchung des Aufgabegutes durch Hochdruck-Pressung gibt es im Aufgabegut zur Rohrmühle nichts zu desagglomerieren.

Bei der erfindungsgemäßen Einrichtung laufen die Gutausläufe von Desagglomerier-Trommel und Rohrmühle zusammen, indem beide Ausläufe von einem gemeinsamen Gutausfallgehäuse umfaßt sind, das im Gegensatz zum Drehrohr drehfest angeordnet ist. Dazu weist der Drehrohrmantel in seinem vom Gutausfallgehäuse umfaßten Bereich Öffnungen zum Durchtritt des desagglomerierten Gutes sowie des Mahlproduktes und gegebenenfalls des Förderluftstromes der Rohrmühle auf. Der der Desagglomerier-Trommel nachgeschaltete Sichter sichtet genügend feines Fertiggut also sowohl aus dem desagglomerierten Walzenpressenaustragsgut als auch aus dem Mahlprodukt der Rohrmühle sofort aus. Dieses ausgesichtete Feingut kann die Rohrmühle nicht mehr belasten.

Nach einem weiteren Merkmal der Erfindung ist das Gutausfallgehäuse in seinem oberen Bereich über eine Steigleitung mit dem Sichter, insbesondere Luftstromsichter verbunden. In der Steigleitung wird die feine Kornfraktion der Desagglomerier-Trommel und der Rohrmühle vom aus dieser kommenden Förderluftstrom nach oben zum Sichter mitgenommen. An den unteren Bereich des Gutausfallgehäuses kann eine Gutausfallleitung angeschlossen sein, die zu einem Förderorgan, insbesondere Becherwerk führt, welches die grobe Kornfraktion der Desagglomerier-Trommel sowie der Rohrmühle nach oben zum Sichter transportiert. Das aus der Desagglomerier-Trommel ausgetragene Gut kann also teilweise pneumatisch und teilweise mechanisch zum Sichter transportiert werden. Die Sichtung kann in einem statischen Sichter (zum Beispiel Luftstromsichter ohne rotierende Teile) und/oder in einem dynamischen Sichter (zum Beispiel Zyklon-Umluftsichter) erfolgen.

Die Erfindung und deren weiteren Merkmale und Vorteile werden anhand der in den Figuren schematisch dargestellten Ausführungsbeispiele näher erläutert.

Es zeigt:

Fig. 1    das Fließbild einer ersten Ausführungsform der erfindungsgemäßen Einrichtung zur Zerkleinerung spröden Mahlgutes mit vorgeschalteter Hochdruck-Walzenpresse und nachgeschalteter Umlaufmahlanlage, und

Fig. 2    das Fließbild einer anderen Ausführungsform der erfindungsgemäßen Einrichtung zur Zerkleinerung spröden Mahlgutes.

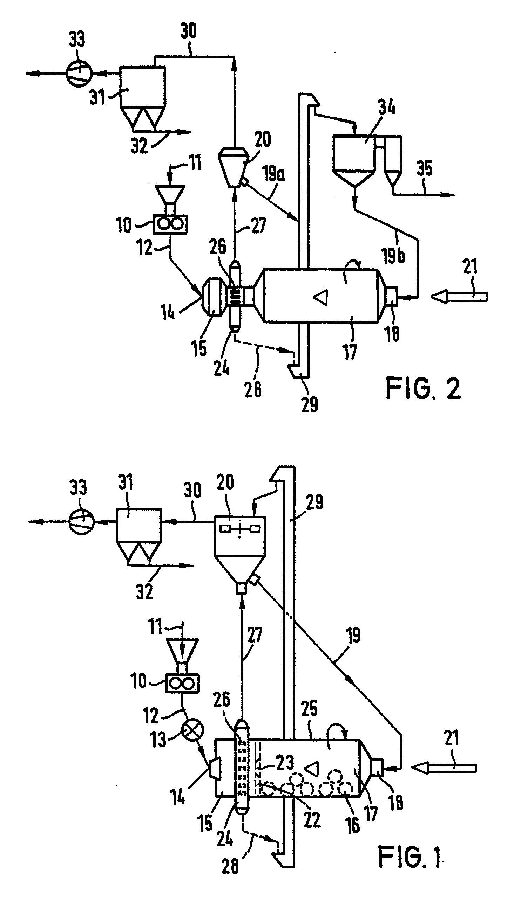

Bei der Ausführungsform nach Fig. 1 besteht die erste Stufe der erfindungsgemäßen zweistufigen Zerkleinerung und Mahlung aus einer Hochdruck-Walzenpresse 10, der das zu zerkleinernde Aufgabegut 11, zum Beispiel nicht vorzerkleinerter Zementklinker mit einer Korngröße bis beispielsweise 100 mm aufgegeben wird. Die Korngröße eines wesentlichen Teils des Aufgabeguts 11 ist größer als die Weite des engsten Walzenspaltes von zum Beispiel 20 mm zwischen den beiden Preßwalzen, die einen Durchmesser von beispielsweise 900 mm haben. Die auf das Gut 11 drückende Preßkraft der Walzen der Walzenpresse 10 beträgt mehr als 2 t/cm Walzenlänge, beispielsweise 6 bis 8,6 t/cm. Das Aufgabegut 11 wird im Spalt zwischen den Walzen durch eine kombinierte Einzelkornzerkleinerung und Gutbettzerkleinerung zerkleinert. Zur Durchführung des letztgenannten Zerkleinerungsprinzips wird das zu zerkleinernde Aufgabegut 11 über einen oberhalb des Walzenspaltes angeordneten vertikalen Schacht in so großer Menge dem Walzenspalt der Presse 10 zugeführt, daß das zu zerkleinernde und zwischen die Walzen eingezogene Gut die Walzen auseinanderdrückt und die Teilchen des Aufgabeguts sich im Walzenspalt in einer Schüttung beziehungsweise im Kollektiv beziehungsweise in einem Gutbett gegenseitig zerquetschen. Der Zementklinker tritt aus dem Walzenspalt der Walzenpresse 10 zerkleinert und teilweise agglomeriert, das heißt zu Schülpen 12 verpreßt aus, die gegebenenfalls über eine Schleuse 13 dem Guteinlauf 14 einer Desagglomeriertrommel 15 zugeführt werden, in der die mit den Händen zerbröckelbaren Schülpen 12, deren Anteil an bereits bis zur gewünschten Zementfeinheit reduzierter Partikeln (ca. 30 % < 90 μm) relativ hoch ist, durch Umwälzbewegung aufgelöst werden.

Mit der Desagglomeriertrommel 15 ist eine mit Mahlkörpern 16 wie Kugeln gefüllte Rohrmühle 17 zu einem Drehrohr integriert. In die Drehrohrstirnseite der Rohrmühle 17 münden über eine zentrische Eingangsöffnung 18 die Grießrückführleitung 19 eines Sichters 20, im Ausführungsbeispiel eines dynamischen Sichters, zusammen mit einem Förderluftstrom 21 ein. Damit die Mahlkörper 16 der Rohrmühle 17 nicht in die Desagglomeriertrommel 15 gelangen, sind beide Kammern des Drehrohres durch eine Trennwand 22 voneinander getrennt, versehen aber mit wenigstens einer zentralen Öffnung 23, durch welche das Mahlprodukt der Rohrmühle 17 sowie der Förderluftstrom 21 in die Desagglomeriertrommel 15 gelangen.

Der Gutauslauf der Desagglomeriertrommel 15 und der Gutauslauf der Rohrmühle (17) sind von einem gemeinsamen Gutausfallgehäuse 24 umfaßt, das drehfest angeordnet ist. Der Drehrohrmantel 25 weist in seinem vom Gutausfallgehause 24 umfassten Bereich Öffnungen 26 zum Durchtritt des aus der Trommel 15 austretenden desagglomerierten Gutes sowie des von der Rohrmühle 17 kommenden Mahlproduktes sowie des Förderluftstromes auf. In seinem oberen Bereich ist das Gutausfallgehäuse 24 mit dem Sichter 20 über eine Steigleitung 27 verbunden, durch welche das desagglomerierte Gut der Trommel 15 als auch das Mahlprodukt der Rohrmühle 17 pneumatisch zum Sichter 20 transportiert werden. An den unteren Bereich des Gutausfallgehäuses 24 ist eine Gutausfalleitung 28 angeschlossen, die zu einem Förderorgan insbesondere Becherwerk 29 führt, welches die gröbere Kornfraktion des aus dem Gutausfallgehäuse 24 ausgetragenen Gutes nach oben mechanisch zum Sichter 20 transportiert. Ist der Förderluftstrom 21 nicht vorhanden, bestünde die Möglichkeit, das gesamte aus dem Gutausfallgehäuse 24 austretende Gut nur über das Becherwerk 29 nach oben zum Sichter 20 zu transportieren. Umgekehrt könnten die gestrichelt gezeichnete Gutausfalleitung 28 sowie das Becherwerk 29 weggelassen werden, wenn es gelingt, das gesamte aus dem Gutausfallgehäuse 24 austretende Gut nur über die Steigleitung 27 pneumatisch zum Sichter 20 zu transportieren. Während die Grieße den Sichter 20 über die Leitung 19 verlassen, wird aus dem Sichter die feine Kornfraktion über Leitung 30 und Staubabscheider 31, zum Beispiel elektrostatischer Staubabscheider abgezogen, aus dem das feine Fertiggut 32, im Ausführungsbeispiel der ausreichend fein gemahlene Zement abgezogen wird. Mit 33 ist ein Saugzuggebläse angezeigt.

Aus dem Ausführungsbeispiel wird deutlich, daß mit der erfindungsgemäßen Einrichtung zur Zerkleinerung und Mahlung spröden Mahlgutes wie zum Beispiel Zementklinker eine erhebliche Energieersparnis erreicht wird, weil die Rohrmühle 17 von dem Anteil des Walzenpressenaustragsgutes 12 entlastet wird, der nach seiner Desagglomerierung in der Trommel 15 bereits die gewünschte Feinheit des Fertiggutes 32 aufweist.

Beim Ausführungsbeispiel der Fig. 2 haben diejenigen Anlagenteile, welche mit denjenigen der Fig. 1 übereinstimmen, die gleichen Bezugsziffern. Bei Fig. 2 münden die Grießeaustragsleitung 19a des mit dem Gutausfallgehäuse 24 des Drehrohres über die Steigleitung 27 verbundenen Sichters 20, in diesem Ausführungsbeispiel ein statischer Sichter, und die untere Gutausfalleitung 28 des Gutausfallgehäuses in ein gemeinsames Förderorgan, insbesondere Becherwerk 29 ein, welches das Gut zu einem weiteren Sichter 34 transportiert, in diesem Falle ein Zyklon-Umluftsichter, dessen Grießeaustragsleitung 19b zum Guteinlauf 18 der Rohrmühle 17 des Drehrohres führt. Der dynamische Sichter 34 sichtet genügend feines Fertiggut 35 (Zement) aus, das mit dem Fertiggut 32 der Entstaubungsanlage 31 zusammengefaßt werden kann.

Die erfindungsgemäße Einrichtung zur Zerkleinerung und Mahlung spröden Mahlgutes wird zu einer Mahltrocknungsanlage, wenn als Förderluftstrom 21 ein Heißgasstrom verwendet wird. Insgesamt wird durch die Erfindung eine weitere Leistungssteigerung und/oder Verminderung des spezifischen Energieaufwandes bei der an sich energieaufwendigen Mahlung spröden Mahlgutes erreicht.

Ist das zu zerkleinernde Aufgabegut 11 heiß, zum Beispiel heißer Zementklinker, so wirkt die Desagglomerier-Trommel 15 gleichzeitig als Kühltrommel. Ist der in der Steigleitung aufsteigende Förderluftstrom heiß, so kann dieser durch indirekte Gaskühlung abgekühlt werden, um durch Reduzierung der Förderluftstrommenge das Bauvolumen des Sichters 20 und/oder der Entstaubungseinrichtung 31 verkleinern zu können.

**Ansprüche**

1. Einrichtung zur Zerkleinerung und Mahlung spröden Mahlgutes wie zum Beispiel Zementklinker, Erz, Kohle oder dergleichen, mit einer eine Mahlkörper beinhaltenden Rohrmühle (17) und wenigstens einen Sichter (20) umfassenden Umlaufmahlanlage, der eine Hochdruck-Walzenpresse (10) mit Gutbettzerkleinerung des Gutes vorgeschaltet ist, dadurch gekennzeichnet, daß am Gutauslauf (23, 26) der Rohrmühle (17) eine mit dieser mitrotierende Desagglomerier-Trommel (15) ohne Mahlkörper angeordnet ist, deren drehrohrstirnseitiger Guteinlauf (14) mit dem Austrag (12) der Walzenpresse (10) und deren Gutauslauf mit dem Sichter (20) in Verbindung stehen, dessen Austragsleitung (19, 19a) für das Grobgut (Grieße) zum drehrohrstirnseitigen Guteinlauf (18) der Rohrmühle (17) führt, gegebenenfalls über einen weiteren Sichter (34).

2. Einrichtung nach Anspruch 1, dadurch gekennzeichnet, daß der Gutauslauf der Desagglomerier-Trommel (15) und der Gutauslauf der Rohrmühle (17) von einem gemeinsamen Gutausfallgehäuse (24) umfaßt sind, das drehfest angeordnet ist.

3. Einrichtung nach Anspruch 2, dadurch gekennzeichnet, daß der Drehrohrmantel (25) in seinem vom Gutausfallgehäuse (24) umfaßten Bereich Öffnungen (26) zum Durchtritt des desagglomerierten Gutes sowie des Mahlproduktes und gegebenenfalls Förderluftstromes (21) der Rohrmühle (17) aufweist.

4. Einrichtung nach den Ansprüchen 2 oder 3, dadurch gekennzeichnet, daß das Gutausfallgehäuse (24) in seinem oberen Bereich über eine Steigleitung (27) mit dem Sichter (20) verbunden ist.

5. Einrichtung nach einem der Ansprüche 2 bis 4, dadurch gekennzeichnet, daß an den unteren Bereich des Gutausfallgehäuses (24) eine Gutausfalleitung (28) angeschlossen ist, die zu einem Förderorgan, insbesondere Becherwerk (29) führt, welches das Gut der Gutausfalleitung (28) nach oben zu dem Sichter (20) transportiert.

6. Einrichtung nach den Ansprüchen 4 und 5, dadurch gekennzeichnet, daß die Grießeaustragsleitung (19a) des mit dem Gutausfallgehäuse (24) des Drehrohres verbundenen Sichters (20) und die untere Gutausfalleitung (28) des Gutausfallgehäuses in ein gemeinsames Förderorgan insbesondere Becherwerk (29) münden, welches das Gut zu einem weiteren Sichter (34) transportiert, dessen Grießeaustragsleitung (19b) zum Guteinlauf (18) der Rohrmühle (17) des Drehrohres führt.

**Claims**

1. A device for crushing and grinding brittle material such as cement clinker, for example, or coal or the like, having tube mill (17) containing grinding bodies and a grinding plant including at least one separator (20), preceded by a high-pressure roll press (10) using material bed crushing of the material, **characterised in that** at the material outlet (23, 26) of the tube mill (17) is arranged, a deagglomerating drum (15) without grinding bodies but rotating with the tubular mill (17) the material inlet (14) of which, which is at the end face of the rotary tube, is in connection with the output (12) of the roll press (10) and the material outlet of which is in connection with the separator (20), of which the extraction line (19, 19a) for the coarse material (reject) leads to the material inlet (18) of the tube mill (17) which is at the end face of the rotary tube, in some cases via a further separator (34).

2. A device according to claim 1, **characterised in that** the material outlet of the deagglomerating drum (15) and the material outlet of the tube mill (17) are surrounded by a common material discharge casing (24) which is fixed against rotation.

3. A device according to claim 2, **characterised in that** the rotary tube sleeve (25) has in its region surrounded by the material discharge casing (24) openings (26) for the passage of the deagglomerated material and of the crushed product and in some cases of the flow (21) of conveyer air from the tube mill (17).

4. A device according to claims 2 or 3, **characterised in that** the material discharge casing (24) is connected in its upper region to the separator (20) via a rising line (27).

5. A device according to any one of claims 2 to 4, **characterised in that** attached to the lower region of the material discharge casing (24) is a material discharge line (28) which leads to a conveyer element, more particularly a bucket conveyer (29) which transports the material from the material discharge line (28) upwardly to the separator (20).

6. A device according to claims 4 and 5, **characterised in that** the reject discharge line (19a) of the separator (20) connected to the material discharge casing (24) of the rotary tube and the lower material discharge line (28) of the material discharge casing open into a common conveyer element, more particularly a bucket conveyer (29), which transports the material to a further separator (34) the reject extraction line (19b) of which leads to the material inlet (18) of the tube mill (17) of the rotary tube.

## Revendications

1. Dispositif pour broyer et pulvériser une substance à broyer cassante, comme par exemple des clinkers, du minerai, du charbon ou analogue, comportant une installation rotative de broyage, qui comporte un broyeur tubulaire (17) contenant un corps de broyage et au moins un séparateur à air (20) et en amont de laquelle est montée une presse à cylindres à haute pression (10) réalisant une fragmentation de la substance pour former un lit de cette dernière, caractérisé en ce qu'à la sortie (23,26), qui délivre la substance, du broyeur tubulaire (17) est disposé un tambour de désagglomération (15), qui tourne conjointement avec le broyeur tubulaire, et ne comporte aucun corps de broyage et dont l'entrée (14) pour la substance, située sur le côté frontal du tube rotatif, est raccordée à la presse à cylindres (10) tandis que la sortie pour la substance est raccordée au séparateur à air (20), dont la canalisation de sortie (19,19a) pour la substance grossière (gravier) aboutit à l'entrée (18) pour la substance, située au niveau du côté frontal du tube rotatif, du broyeur tubulaire (17), éventuellement par l'intermédiaire d'un autre séparateur à air (34).

2. Dispositif selon la revendication 1, caractérisé en ce que la sortie de passage de la substance du tambour de désagglomération (15) et la sortie de passage de la substance hors du broyeur tubulaire (17) sont entourées par un carter commun (24) d'évacuation de la substance, qui est monté fixe.

3. Dispositif selon la revendication 2, caractérisé en ce que l'enveloppe (25) du tube rotatif comporte, dans sa partie entourée par le carter (24) d'évacuation de la substance, des ouvertures (26) permettant le passage de la substance désagglomérée ainsi que du produit broyé et éventuellement du courant d'air d'entraînement (21) du broyeur tubulaire (17).

4. Dispositif selon les revendications 2 ou 3, caractérisé en ce que le carter (24) d'évacuation de la substance est raccordé, dans sa partie supérieure, au séparateur à air (20), par l'intermédiaire d'une canalisation montante (27).

5. Dispositif selon l'une des revendications 2 à 4, caractérisé en ce qu'à la partie inférieure du carter (24) d'évacuation de la substance est raccordée une canalisation (28) d'évacuation de la substance, qui conduit à une unité d'entraînement, notamment un élévateur à godets (29), qui entraîne la substance de la canalisation (28) d'évacuation de la substance, vers le haut, en direction du séparateur à air (20).

6. Dispositif selon les revendications 4 et 5, caractérisé en ce que la canalisation (19a) de sortie du gravier du séparateur à air raccordé au carter (24) d'évacuation de la substance du tube rotatif et la canalisation inférieure (28) d'évacuation du gravier du carter d'évacuation du gravier débouchent dans une unité commune d'entraînement, notamment un élévateur à godets (29), qui entraîne la substance jusqu'à un autre séparateur à air (34), dont la canalisation (19b) d'évacuation du gravier aboutit à l'entrée (18) de la substance du broyeur tubulaire (17) du tube rotatif.

FIG. 2

FIG. 1